# EUROPEAN PATENT APPLICATION

(11) **EP 3 772 280 A1**
(43) Date of publication of application: **10.02.2021**
(21) Application number: 19190477.0
(22) Date of filing: 07.08.2019
(51) Int. Cl.: A01N 35/02, A01P 17/00

(54) **USE OF COMPOUNDS AS REPELLENTS AND/OR DETERRENTS OF ARTHROPODS**

(71) Applicant: Université de Neuchâtel, 2000 Neuchatel (CH)
(72) Inventor: TURLINGS, Théodoor, 2000 Neuchâtel (CH); JAFFUEL, Geoffrey, 2000 Neuchâtel (CH)
(74) Representative: Schneiter, Sorin

(57) **Abstract**

The present invention concerns the new use of compounds as insect repellents and/or deterrents. The compounds act particularly well to repel ants and/or mosquitos. The invention also concerns a method for repelling and/or deterring insects, the method comprising providing a and/or administering a composition comprising the compounds. The invention also relates to an insect repelling and/or deterring composition comprising the compounds.

## Description

### Technical Field

The present invention relates to compounds for repelling and/or deterring arthropods, to compositions comprising the compounds, to a method of repelling and/or deterring arthropods, to the use of the compounds for repelling and/or deterring arthropods, and to a method for identifying arthropod repelling and/or deterring compounds.

### Background Art and Problems Solved by the Invention

It is an objective of the present invention to provide novel compounds for repelling and/or deterring arthropods. There are various arthropod repelling formulations commercially available. The effect of these formulations generally depends on the species that is targeted, on the dose and on a specific formulation.

It is an objective of the invention to provide compounds that are more potent than others and which are potent against a wider spectrum of arthropods. Furthermore, it is an objective to provide compounds that are cheap to produce and compounds that pose no known hazard to the environment and to the health of humans and animals.

WO2014146143A2 discloses compounds, compositions, and methods for repelling an insect from an area, article or structure. This document discloses the use of 2-decanone for repelling honey-bees.

The present invention addresses the problems depicted above.

### Summary of the Invention

Surprisingly, the inventors observed that certain compounds that are emitted from cadavers of insects are repellent to arthropods, in particular to insects and ticks.

In an aspect, the present invention provides compounds and their use for repelling and/or deterring arthropods. Preferably, said compounds are ketones and aldehydes having from 12-25 carbons. Said aldehydes and/or ketones may be completely or partially halogenated.

In an aspect, the present invention provides compounds of formula I: 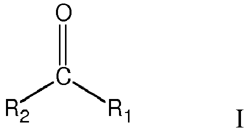 wherein,
R₁ is selected from H, CH₃, C2-C10 alkyl and C2-C10 alkenyl.
R₂ is selected from C8-C20 alkyl and C8-C20 alkenyl, preferably C14-C20 alkyl or alkenyl, and wherein said alkyl and/or alkenyl may be independently partially or completely halogenated.

In an aspect, the present invention provides the use of the compounds of formula I as a repellent and/or deterrent of arthropods, in particular insects and ticks.

In an aspect, the invention provides a composition for repelling and/or deterring arthropods, the composition comprising one or more compounds of formula I.

In an aspect, the invention provides a method for repelling and/or deterring arthropods, the method comprising providing and/or administering the compound of formula I.

In an aspect, the invention provides a method for detecting, identifying, isolating, screening and/or selecting compounds that are repelling and/or deterrent to arthropods, the method comprising:
a) detecting compounds present in insects and/or ticks infected by entomopathogenic nematodes (EPN) but absent in uninfected insects and/or ticks,
b) identifying the compounds detected in step a), and,
c) selecting compounds identified in step a) based on their property of repelling and/or deterring arthropods.

In an aspect, the invention provides a deterrence bioassay.

Further aspects and preferred embodiments are described in the detailed description of preferred embodiments and the appended claims.

### Brief Description of the Drawings

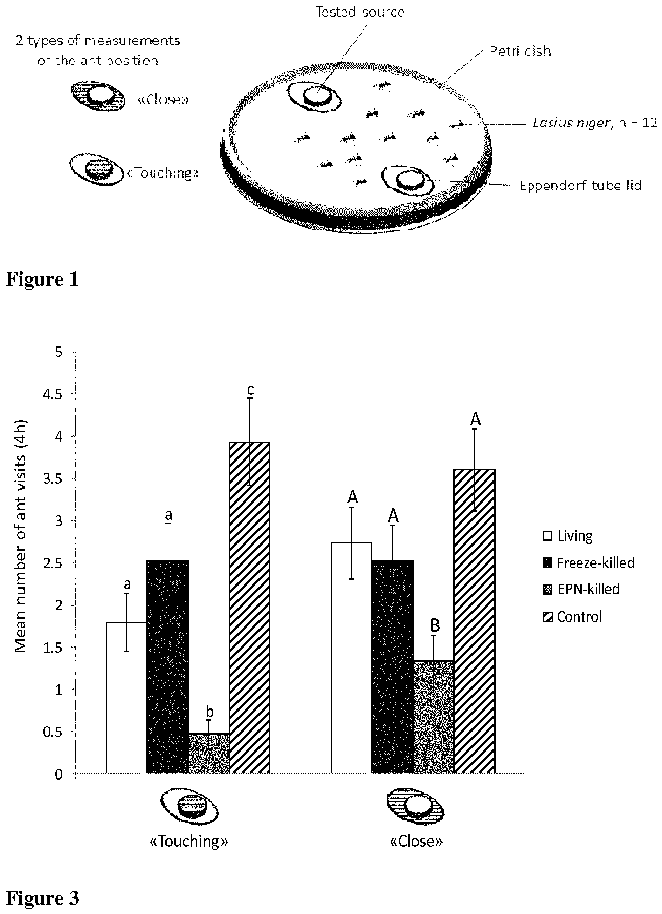

**Figure 1** schematically illustrates an ant deterrence bioassay used in accordance with an embodiment of the invention.

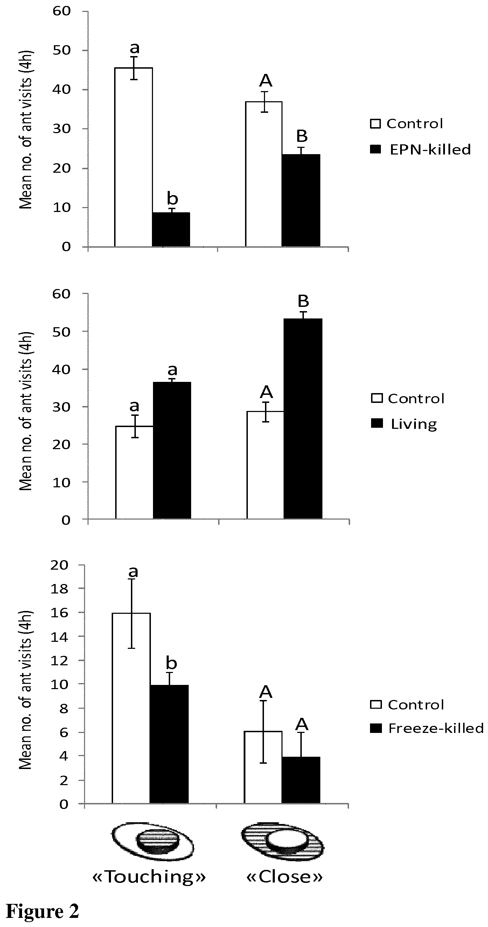

**Figure 2** shows the results of a bioassay conducted in accordance with an embodiment of the invention, as indicated in the examples. The graphs indicate the mean number of ant visits over 4 hours to A: control and EPN-killed extract, B: control and living extract and C: to control and freeze-killed extract. Bars represent mean percentage ± SE. Means denoted by different letters are significantly different (p<0.05).
**Figure 3** shows the results of another bioassay conducted in accordance with an embodiment of the invention, as indicated in the examples. The graphs indicate the number of ant visits over 4 hours to control, living, freeze-killed and EPN-killed extracts. Bars represent mean percentage + SE. Means denoted by different letters are significantly different (p<0.05).

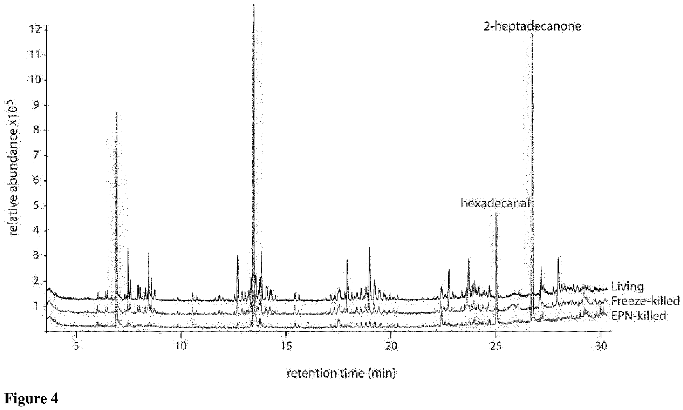

**Figure 4** illustrates the identification of arthropod repelling compounds in accordance with an embodiment of the invention. The figure is a GC-MS chromatogram of living, freeze-killed and EPN-killed extracts, with hexadecanal and 2-heptadecanone only found in nematode extract samples.

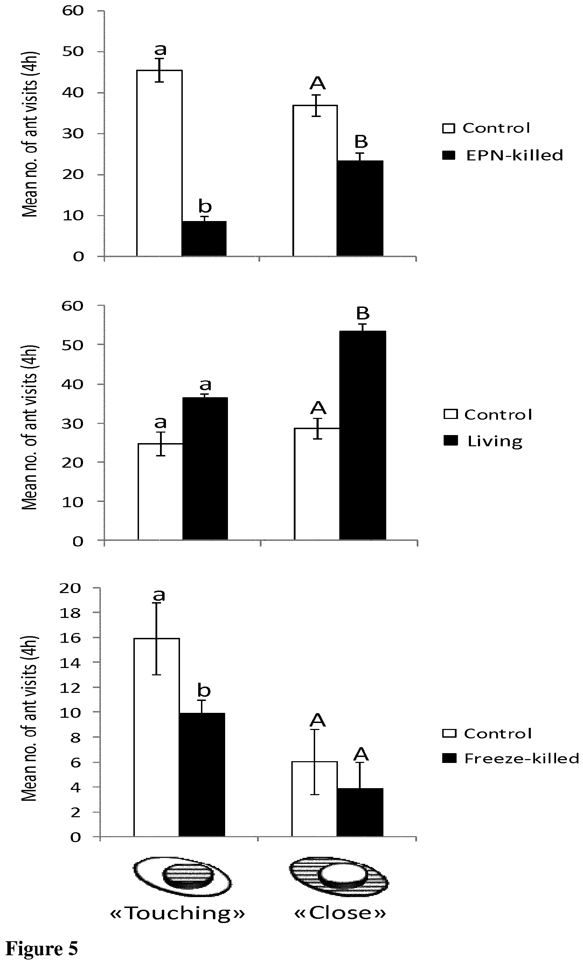

**Figure 5** shows the results of an assay conducted in accordance with an embodiment of the invention for identifying arthropod repelling compounds, as indicated in the examples. Mean number of ant visits over 4 hours to A: control and hexadecanal sample, B: control solution and 2-heptadecanone, C: control solution and a mix of hexadecanal and 2-heptadecanone sample. Bars represent mean percentage ± SE. Means denoted by different letters are significantly different (p<0.05).

### Detailed Description of the Preferred Embodiments

The present invention relates to compounds and their use as repellents and/or deterrents of arthropods, and to a method of repelling arthropods, the method comprising providing the compounds disclosed in this specification.

For the purpose of the present specification, the expression "comprising", and its various grammatical forms, means "includes, amongst other". It is not intended to mean "consists only of".

In an embodiment, said compounds are selected from ketones and aldehydes having from 12-25 carbons. In a preferred embodiment, ketones and aldehydes have 13-20 carbons, more preferably 14-19 carbons, even more preferably 15-18 carbons and most preferably 16 or 17 carbons.

Preferably, said ketones and/or aldehydes comprise one or more linear aliphatic substituent or chain, for example a linear alkyl or alkenyl chain, most preferably a linear alkyl chain. Preferably, said linear alkyl or alkenyl chain comprises 13-19 carbons, more preferably 14-18 carbons, most preferably 14-16 carbons, for example 15 carbons. Most preferably, said linear aliphatic chain is a linear alkyl.

In an embodiment, said compounds are selected from compounds of formula I: 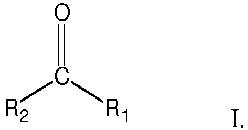 wherein, R₁ and R₂ are selected independently from H and from aliphatic substituents comprising from 1-20 carbons.

The aldehydes and ketones of the compounds disclosed in this specification are optionally partially or totally halogenated. Halogens are preferably selected from F, Cl, Br, and I. In a preferred embodiment, said compounds are not halogenated.

In a preferred embodiment, R₁ is selected from H, CH₃, C2-C10 alkyl and C2-C10 alkenyl and R₂ is selected from C8-C20 alkyl and C8-C20 alkenyl.

In an embodiment, R₁ and R₂ together have 10-25 carbons, preferably 12-20, more preferably 14-18 carbons, and most preferably 15 or 16 carbons.

In an embodiment, R₂ is selected from C10-C18 alkyl or alkenyl, preferably C10-C17 alkyl or alkenyl, most preferably C13-C16 alkyl or alkenyl.

In an embodiment, R₂ is a C15 alkyl or alkenyl, preferably alkyl, most preferably linear alkyl.

In an embodiment, R₁ is selected from H and CH₃.

In an embodiment, said aliphatic substituent or chain, in particular said alkyl, alkenyl, alkyls, and/or alkenyls is/are linear.

In an embodiment, said aliphatic substituent or chain, in particular said alkyl, alkenyl, alkyls, and/or alkenyls is/are unsubstituted.

In a preferred embodiment, R₁ is selected from H, CH₃, and R₂ is selected from C10-C18 alkyl or alkenyl, preferably C10-C17 alkyl or alkenyl, most preferably C13-C16 alkyl or alkenyl. Preferably, said alkyl and/or alkenyl are linear. Preferably, R₂ is selected from C14-C16 alkyl or alkenyl, most preferably R₂ is a C15 alkyl, preferably a linear C15 alkyl.

In a preferred embodiment, said compound is selected from hexadecanal and 2-heptadecanone.

In a preferred embodiment, said compound is a compound that is produced or found in nematode infected insects. Preferably, said compound is produced by pathogenic nematodes, in particular EPNs, and/or by insect pathogenic bacteria living in association, for example in symbiosis, with said pathogenic nematodes. Preferably, said bacteria release a toxin that can kill said insect.

In an embodiment, said compound is produced by endosymbiotic bacteria of said pathogenic nematodes, preferably while inside an insect cadaver.

In a preferred embodiment, said compound is for repelling and/or deterring insects and/or ticks. In a preferred embodiment, said insects are selected from Hymenoptera insects and Diptera insects.

In a preferred embodiment, said compound is for repelling and/or deterring one or both selected from ants and mosquitos.

In an embodiment, said compound is an arthropod deterring more than an arthropod repelling substance. Preferably, the compounds of the invention are particularly effective at close range and comparatively less effective at longer ranges. A "close range" is a range defined by a distance of about 3cm or less to the position of the compound.

Interestingly, some of the compounds of the invention may be used specifically as arthropod deterrents. This means that the compounds deter arthropods only if the arthropods get close (e.g. 3cm or closer) to the place or administration of the compound of the invention. The range of the repelling and/or deterring effect may be adjusted by adapting the amount and/or concentration of the compound that is applied.

The compounds of the invention are advantageous in that they are substantially odourless to humans and/or do not exhibit any undesired or unpleasant odour to humans.

In a preferred embodiment, said arthropod is a scavenging arthropod, preferably a scavenging insect. Preferably, said arthropod is susceptible to infection by parasitic and/or pathogenic nematodes such as EPNs.

In an embodiment, the invention provides a composition comprising one or more compounds of the invention. Preferably, said composition is for repelling and/or deterring arthropods. For example, said composition is an insects and/or ticks repelling composition.

In an embodiment, the composition comprises a combination of two or more compounds in accordance with the invention. In an embodiment, the composition comprises an aldehyde and a ketone in accordance with the invention.

In an embodiment, the composition comprises a first compound of formula I in which R₁ and is H and another compound of formula I in which R₁ is CH₃, with R₂ of the two compounds being independently selected from C8-C18 alkyl or alkenyl, which alkyl or alkenyl is optionally halogenated and is preferably linear.

In an embodiment, the composition comprises hexadecanal and a ketone compound of formula I in which R₁ is CH₃ and R₂ is selected from C8-C18 alkyl or alkenyl, which alkyl or alkenyl is optionally halogenated and is preferably linear.

In an embodiment, the composition comprises a first compound of formula I in which R₁ and is H and another compound in which R₁ is CH₃, with R₂ being independently as defined elsewhere in this specification, preferably selected from C8-C18 alkyl or alkenyl, which alkyl or alkenyl is optionally halogenated and is preferably linear.

Preferably, said C8-C18 alkyl or alkenyl is a C10-C18 alkyl or alkenyl, preferably C10-C17 alkyl or alkenyl, most preferably C13-C16 alkyl or alkenyl, for example a C15 alkyl.

In a preferred embodiment, the composition comprises both, hexadecanal and 2-heptadecanone.

Preferably, said composition further comprises one or more additional constituents, such as one or more carriers, additives, solvents, binders, excipients and the like.

The one or more additional constituents are preferably selected by the skilled person depending on the particular type of composition. The composition may be liquid at room temperature (RT, 25°C). In this case, the one or more additional constituents may comprise a liquid carrier, such as a solvent.

In another embodiment, the composition may be provided as a pressurized gas, and said one or more carriers may comprises a gaseous component at RT. If the gas is pressurized, it may be provided as a liquid at RT, for example.

In yet other compositions, the composition may be provided as a solid or gel, comprising carrier molecules for providing a solid or jellified matrix, for example.

In an embodiment of the invention, said one or more compound is comprised in a composition, in particular in a composition for repelling arthropods.

In an embodiment, the method of the invention is for repelling said arthropods from a location, area, structure, object and/or from a living subject. Preferably, said method comprises administering and/or applying the compounds and/or the composition to the location, area, structure, object and/or subject. Preferably, the arthropods are to be repelled from said location, area, structure, object and/or subject. Preferably, said method comprises applicating and/or administering the composition of the invention to said location, area, structure, object and/or subject. In some embodiments, said composition is a composition for topical administration, for example to the skin on a human or animal subject.

In some embodiments, the invention relates to a method for finding compounds that are repelling and/or deterrent to arthropods. Preferably, the method is for detecting, isolating, screening and/or selecting compounds that are repelling and/or deterrent to arthropods. The invention also relates to an assay for determining if a composition and/or compounds has arthropod repelling and/or deterring effects.

The method for identifying arthropod repelling compounds preferably comprises detecting compounds present in arthropods infected by pathogenic nematodes. Preferably, compounds are selected that are absent in uninfected arthropods.

For example, said pathogenic nematodes are entomopathogenic nematodes (EPN). For example, said insects may be larvae of moths. Preferably, said insects are cadavers, more preferably insects killed due to the infection by said EPN.

Said compounds may be detected and/or identified by way of GC-MS chromatograms, for example. The compounds may be detected by comparing a GC-MS chromatogram obtained from an extract of EPN-killed arthropods, such as EPN-killed insects or ticks, with a corresponding (comparative) GC-MS chromatogram obtained from arthropods that are not infected by said pathogenic nematodes, in particular said EPN. Said comparative GC-MS chromatogram may be obtained from living arthropods or arthropods not killed by EPN infection, for example.

Preferably, compounds are selected that are consistently and/or exclusively found in the extracts of EPN-killed arthropods, preferably EPN-killed insects.

In a preferred embodiment, the analysis is limited to volatile compounds present in and thus emitted from said EPN-killed arthropods. For example, said compounds may be analysed using a gas chromatograph coupled with a mass spectrometer detector (GC/MS).

After detecting peaks in a GC-MS chromatogram from an extract of EPN-killed arthropods that are absent in said comparative GC-MS chromatogram, the compounds may be identified. Preferably, this step comprises identifying the structure of the compounds detected in step a) of the method of the invention. The structure identification may be conducted as is known in the art, for example by comparing the mass spectrum of a detected compound with mass spectra available in databases, for example, or by other suitable compound identifying methods.

Once the structures of the compounds have been identified, it is possible to determine the arthropod repelling properties of the identified compounds in an assay, e.g. by exposing arthropods to composition comprising or not the isolated, identified compounds. In this assay, cadavers of arthropods such as EPN killed insects or ticks are preferably not used any more, so as to make sure that the arthropod repelling effect observed (or not) can be attributed to a specific compound. A compound is preferably selected if it exhibits arthropod repelling properties. In step c) of the method of the invention, it is also possible to select and/or discriminate comparatively more potent compounds with respect to comparatively less potent compounds.

The following examples provide illustrative way of practicing the instant invention and are not intended to limit the scope of the invention in any way.

### Examples

The aim of the current study was to identify repellents or deterrents emitted by nematode-killed cadavers using volatile analysis and behavioral assays. Extracts were obtained by solvent extraction of living *Galleria mellonella (L)* larvae, as well as from freeze-killed and *S. feltiae-killed* G. *mellonella* larvae. By applying the extracts to drops of diluted honey, we tested their deterrence to ants *(Lasius niger)* in two-choice and four-choice bioassays. We then used chemical analyses to compare volatiles compounds in the extracts in order to identify candidate deterrent compound(s). The deterrence of these candidate compounds were then tested and confirmed in additional choice assays with honey-water drops.

### 1. Material and Methods

### 1.1 Nematode cultures and ant colonies

*Steinernema feltiae* Filipjev was obtained from Andermatt Biocontrol (Grossdietwil, Switzerland). The nematode colony was maintained and cultured using last instar larvae of *Galleria mellonella* (L.) at room temperature (23/24°C) as described by (Kaya and Stock, 1997). The nematode-infected larvae were placed on a White trap and emerging infective juveniles (IJs) were collected from the water (White, 1927). The IJs were stored at 15°C in culture flasks.

Laboratory grown colonies of the ant *Lasius niger* were obtained from the University of Lausanne (Keller-group, n=14). Each colony consisted of workers (50-500), a queen and their brood. The colonies were maintained with an artificial diet that was prepared using a mixture of 4 eggs, honey (500g), water (32cl) and agar (24g). The colonies were also provided with a tube containing a 10 % honey-water mixture and *Tenebrio molitor* (mealworms). The colonies were fed every week.

### 1.2 Solvent extraction and samples preparation

Freeze-killed (-80°C), living, or EPN-killed (4 days) *G*. *mellonella* larvae were dipped in 400 µl of hexane for 30 seconds. These hexane extracts were stored in 1ml glass vials (BGB Analytik AG, Böckten, Switzerland). For the purpose of GC/MS analyses, an aliquot of 100 µl of each extract was transferred to another 1ml glass vials (BGB Analytik AG, Böckten, Switzerland) into a 200 µl insert and 10 µl of hexane with the internal standards nonyl-acetate (20 ng/µl) and eucalyptol (20 ng/µl) were added. Vials were stored at -80°C prior to analyses. For the purpose of bioassays, the original extracts were left to evaporate under nitrogen gas in a fume hood and the extracts were resuspended in 100 µl of MilliQ water. As control, 100 µl of hexane was added to a vial, evaporated and resuspended in 100 µl of MilliQ water. Vials were stored at -80°C prior to bioassays.

### 1.3 Two-choice and four-choice honey-water bioassays

We first tested the deterrence of extracts obtained from freeze-killed, living, or EPN-killed G. *mellonella* larvae in a two-choice bioassay. Each time, 100 µl of an extract was mixed with 100 µl of a solution of water and honey (10%) in an Eppendorf tube lid. Control solutions were obtained by adding 100 µl of MilliQ water to 100 µl of honey-water. Twelve workers of *L. niger* were placed in a petri dish (100 x 25mm) containing two Eppendorf tube lids, one with the extract solution and the other with the control solution. The bioassays were monitored by video over a period of 4 hrs using the iSpy software (https://www.ispyconnect.com/). The position of the ants in relation to the Eppendorf tube was noted every minute. The bioassay was carried out with 8 different *L. niger* colonies and was replicated 3 times with each colony. A similar series of four-choice bioassays was conducted ants in which the ants were offered all of the 3 extracts and the control simultaneously in the same petri dish. This assay was replicated 2 times for 8 ant colonies.

### 1.4 Chemical profile and identification

The different extracts (n=15) were analyzed using a gas chromatograph (Agilent 6890) coupled with a mass spectrometer detector (GC/MS). A 2 µl aliquot of each sample was injected in pulsed splitless mode into an Agilent HP-5MS column (30 m length x 250 µm diameter and 0.25 µm film thickness). After injection, temperature was maintained at 69°C for 3.5 min, increased to 100°C at a rate of 8°C per min and subsequently to 230°C at a rate of 5°C per min followed by a post run of 3 min at 250°C. Helium was the carrier gas and kept at a constant flow of 0.9 ml/min. Compounds were identified by comparing their mass spectra with those from the NIST mass spectral library (U.S. Department of Commerce). Quantifications of the compounds of interest were obtained based on the peak areas of these compounds compared to the peak areas of the internal standards.

### 1.5 Individual two-choice and mixed bioassays of candidate compounds

We tested the deterrence of two of the identified compounds (2-heptadecanone and 2-hexadecanal) that were consistently and exclusively found in the extracts of EPN-killed G. *mellonella* larvae. Both compounds were obtained from TCI chemicals GmbH (Eschborn, Germany). The bioassays were performed similarly to the two-choice test bioassay performed on the original extracts. Briefly, twelve workers of *L. niger* were added to a petri dish (provide dimension) containing an Eppendorf tube lid with 100µl honey (10%) water with one of the compound and another lid with only 100 µl of honey-water as control. The bioassay was carried with 5 different *L. niger* colonies and replicated 2 times for each colony. Ant behavior was monitored by video over a period of 4 hrs using iSpy software. The concentrations of the compounds were adapted to the ones measured with the GC/MS analyses (1.4 ng/µl and 0.48 ng/µl respectively). In additional series of assays we used honey-water with a mixture of both compounds (at the same concentrations) next to control honey-water.

### 1.6 Bioassays measurement criteria

The position of the ants on the Eppendorf lids was recorded every minute as "touching" and "close". The "touching" measurements were recorded when the ants were in the center part of a lid where they would feed on the samples. The "close" measurements were noted when the ants were in outer part of an Eppendorf lid (**Figure 1**).

### 1.7 Statistical analyses

Statistics were carried using R (R Core Team, 2008). Data were analyzed using an "Exact Wilcoxon-Pratt Signed-Rank Test" from the package "coin". This test allows analyzing non-parametric data as well as to cope with repeated measurement. When necessary, p-values were corrected by the Benjamini-Hochberg procedure (Benjamini and Hochberg, 1995).

### 2. Results

### 2.1 Bioassays with extracts

Two-choice bioassay: More ants visited the Eppendorf tube with the control sugar solution as compared to the solutions spiked with the extract of EPN-killed larvae. For the "touching" measurements, the ants visited the control lids 5.3x more often than the ones with EPN-killed extract (Z = 11.9945, p-value < 0.001, fig. 2A). Ants visited lids with extracts from living larvae1.5x more often than the controls (Z = 0.3202, p-value = 0.7527, fig. 8). Controls were visited 1.6x more often than freeze-killed extracts (Z = 2.9678, p-value <0.01, fig. 9). For the "close" measurements, the ants visited the living extracts 1.8x more than the controls (Z = - 3.915, p-value <0.001, fig. 2B). The controls were visited as often as the freeze-killed extract (0.15x) (Z = 1.4811, p-value = 0.1259, fig. 2C) and 1.6x more often than the EPN-killed extracts (Z = 5.1109, p-value <0.001, **Figure 2**).

The four-choice bioassays confirmed the repellency of the EPN-killed larvae. For the "touching" measurements, there was a significant difference in the mean number of ant visits among all the four extracts. The ants preferred to visit ("touching") the control lids, whereas the lids with extracts from EPN-killed larvae were the least preferred by the ants. The mean number of ants that visited the controls was approximately 2x more than lids with extracts from living larvae (Z = -3.3632, p-value < 0.01), 1.5x more than with freeze-killed extracts (Z = -2.2668, p-value = 0.03) and 8.4x more than the EPN-killed extract (Z = -6.326, p-value < 0.001). For the "close" measurements there was no significant difference of ant visits among the control, living and freeze-killed extracts, but the ants significantly preferred the controls to the EPN-killed extracts. The mean number of ants that entered ("close") the controls was approximately 1.3x more than the lids with living extracts (Z = -1.3338, p-value = 0.26), 1.4x more than the freeze-killed extracts (Z = -1.6865, p-value = 0.16) and 2.7x more than the EPN-killed extracts (Z = -4.0947, p-value < 0.001; **Figure 3**).

### 2.2 GC-MS chromatogram analysis

The analyses of the extracts obtained by the solvent extraction of freeze-killed, living and EPN-killed *G.mellonella* larvae showed two distinctive peaks that were only obtained with the EPN-killed samples **(****Figure 4**). The compounds were first tentatively identified by comparing their mass spectra with those in the NIST library (Johnson 2016) as hexadecanal and 2-heptadecanone. The identities were then confirmed with authentic standards obtained from TCI chemicals GmbH (Eschborn, Germany), and using calibration curves their average quantities in each extract were calculated as 0.48 ng/µl and 1.4 ng/µl, respectively.

### 3.3 Bioassays with hexadecanal and 2-heptadecanone

Using the same concentrations as found in the extracts, the ants visited ("touching") the controls 5.8x more often than the hexadecane solutions (Z = 7.808, p-value <0.001), but they approached ("close") the controls at a similar rate as hexadecanal solutions (Z = 0.95716, p-value = 0.3479; **Figure 5****,** panel A).

When testing solutions spiked with 2-heptadecanone, control solutions were visited ("touching") 6.8x times more often (Z = 8.5606, p-value < 0.001). The ants also approached ("close") the controls (1.2x more) than the 2-heptadecanone solutions (Z = 2.37, p-value <0.05, **Figure 5****,** panel B).

When we combined hexadecanal and 2-heptadecanone, the ants visited ("touching") the controls 8x times more often (Z = 9.8606, p-value < 0.001, fig13), and the approached ("close") the controls 1.5x times more often (Z = 5.8234, p-value <0.001, **Figure 5****,** panel C).

### 3. Discussion

We found that hexane extracts of EPN-killed G. *mellonella* larvae deters the ant *Lasius niger.* Specifically, we found that considerably fewer ants would visit honey-water drops that were spiked with the extract than control (unspiked) drops or drops that were spiked with the extracts of living or freeze-killed larvae. Using GC/MS analyses, we identified two compounds, hexadecanal and 2-heptadecanone, that were exclusively found in the extracts of EPN-killed G. *mellonella* larvae, and not in the other extracts. Feeding assays with pure versions of these compounds at the same concentrations that were found in the extracts confirmed their deterrent effects on the ants. Combined the compounds were slightly more effective than when the honey-water only contained one of them.

The nematode used in this study was *Steinernema feltae,* which carries and relies on the bacterium *Xenorhabdus bovienii* for successful infections. It is assumed that the bacteria are the source of the deterrents (Zhou et al., 2002; Gulcu et al., 2012), but this remains to be determined for our study system. Preliminary tests indicate that hexadecanal and 2-heptadecanone also repel mosquitoes (data not shown).

It should be noted that, in ant assays, we spiked the honey-water with the equivalent of what was extracted from one nematode-infected larvae. At these very low concentrations (around 1 ng/µl) we already observed a clear deterrent effect. Commercially available repellent/deterrents are usual applied in much higher concentrations, which implies that hexadecanal and 2-heptadecanone have potential for commercial application.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

### References

Baur, M. E., Kaya, H. K., & Strong, D. R. (1998). Foraging ants as scavengers on entomopathogenic nematode-killed insects. Biological Control, 12(3), 231-236.
Benjamini, Y., & Hochberg, Y. (1995). Controlling the false discovery rate: a practical and powerful approach to multiple testing. Journal of the royal statistical society. Series B (Methodological), 289-300.
Dillman, A. R., Chaston, J. M., Adams, B. J., Ciche, T. A., Goodrich-Blair, H., Stock, S. P., & Sternberg, P. W. (2012). An entomopathogenic nematode by any other name. PLoS Pathogens, 8(3), e1002527
Ehlers, R. U. (1996). Symbiotic relation within the nematode-bacterium complex. Symbiosis and pathogenicity of the nematode-bacterium complexes. N. Boemare, R. U. Ehlers, A. Fodor and A. Szentirmai, European Commission: 45-51.
Johnson S. NIST Standard Reference Database 1A v14. In: NIST [Internet]. 19 Jun 2014 [cited 27 Sep 2016]. Available: https://www.nist.gov/srd/nist-standard-reference-database-1a-v14
Forst, S., and D. Clarke. (2002). Bacteria-nematode symbioses. In: Gaugler R. (Ed.), Entomopathogenic nematology. CABI Publishing, Wallingford, United Kingdom, p. 57-77
Goodrich-Blair, H., & Clarke, D. J. (2007). Mutualism and pathogenesis in Xenorhabdus and Photorhabdus: two roads to the same destination. Molecular microbiology, 64(2), 260-268.
Gulcu, B., Hazir, S., & Kaya, H. K. (2012). Scavenger deterrent factor (SDF) from symbiotic bacteria of entomopathogenic nematodes. Journal of invertebrate pathology, 110(3), 326-333.
Hominick, W. M., Reid, A. P., Bohan, D. A., & Briscoe, B. R. (1996). Entomopathogenic nematodes: biodiversity, geographical distribution and the convention on biological diversity. Biocontrol Science and Technology, 6(3), 317-332.
Kaya, H. K., & Gaugler, R. (1993). Entomopathogenic nematodes. Annual review of entomology, 38(1), 181-206.
Kaya, H. K. & Stock S. P. (1997). Techniques in insect nematology. In: Lacey L. A. (Ed., ), Manual of techniques in insect pathology,. Biological Techniques Series, Academic Press, San Diego, California, p. 281-324.
R Development Core Team (2008). R: A language and environment for statistical computing. R Foundation for Statistical Computing. Vienna, Austria. ISBN 3-900051-07-0, URL http://www.R-project.org.
Stock, S. P. (2015). Diversity, biology and evolutionary relationships. In: Campos-Herrera, R. (Ed.), Nematode Pathogeneses of Insects and Other Pests. Springer International Publishing, Switzerland, pp. 3
Webster, J. (2002). Bacterial metabolites. In: Gaugler R. (Ed.), Entomopathogenic nematology. CABI Publishing, Wallingford, United Kingdom. p. 99-114
Weischer, B., & Brown, D. J. (2000). An Introduction to Nematodes: General Nematology: a Student's Textbook (No. 1). Pensoft Publishers.
White, G.F. (1927). A method for obtaining infective nematode larvae from cultures. Science 66, 302-303.
Zhou, X., Kaya, H. K., Heungens, K., & Goodrich-Blair, H. (2002). Response of ants to a deterrent factor (s) produced by the symbiotic bacteria of entomopathogenic nematodes. Applied and Environmental Microbiology, 68(12), 6202-6209.

## Claims

1. The use of a compound of formula I as a repellent and/or deterrent of arthropods 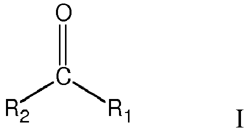 wherein,
R₁ is selected from H, CH₃, C2-C10 alkyl and C2-C10 alkenyl.
R₂ is selected from C8-C20 alkyl and C8-C20 alkenyl,
and wherein said alkyl and/or alkenyl may be independently partially or completely halogenated.

2. The use of claim 1, wherein R₁ and R₂ together have 10-25 carbons, preferably 12-20, more preferably 14-18 carbons, and most preferably 15 or 16 carbons.

3. The use of claim 1 or claim 2, wherein R₂ is selected from C10-C18 alkyl or alkenyl, preferably C10-C17 alkyl or alkenyl, most preferably C13-C16 alkyl or alkenyl.

4. The use of any one of the preceding claims, wherein R₂ is a C15 alkyl or alkenyl.

5. The use of any one of the preceding claims, wherein R₁ is selected from H and CH₃.

6. The use of any one of the preceding claims, wherein said alkyl, alkenyl, alkyls, and/or alkenyls is/are linear.

7. The use of any one of the preceding claims, wherein said compound is selected from hexadecanal and 2-heptadecanone.

8. The use of any one of the preceding claims, wherein said compound is used for repelling and/or deterring insects and ticks, preferably one or both selected from Hymenoptera insects, Diptera insects and ticks.

9. The use of any one of the preceding claims, wherein said compound is used for repelling and/or deterring one or both selected from ants and mosquitos.

10. A composition for repelling and/or deterring arthropods, the composition comprising one or more compounds of formula I according to any one of claims 1-7.

11. A method for repelling and/or deterring arthropods, the method comprising providing the compound of formula I. 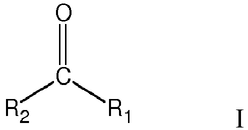 wherein,
R₁ is selected from H, CH₃, C2-C10 alkyl and C2-C10 alkenyl.
R₂ is selected from C8-C20 alkyl and C2-C10 alkenyl.

12. The method of claim 11, wherein said compound is applied to a location and/or object from which said arthropods are to be repelled and/or deterred.

13. The method of claim 11 or 12, wherein said compound is comprised in a composition.

14. The method of any one of claims 11-13, which is for repelling said arthropods from a location and/or object.

15. A method for identifying compounds that are repelling and/or deterrent to arthropods, the method comprising:
a) detecting compounds present in insects infected by entomopathogenic nematodes (EPN) but absent in uninfected insects,
b) optionally, identifying the compounds detected in step b), and,
c) selecting compounds detected in step a) and/or identified in step b) based on their property of repelling and/or deterring arthropods.
